Europäisches Patentamt

European Patent Office

Office européen des brevets

(11) Veröffentlichungsnummer: **0 121 812**
**B1**

(12) **EUROPÄISCHE PATENTSCHRIFT**

(45) Veröffentlichungstag der Patentschrift: **27.12.90**

(21) Anmeldenummer: **84102755.0**

(22) Anmeldetag: **14.03.84**

(51) Int. Cl.⁵: **G 02 B 6/34,** G 02 B 6/10

(54) **Wellenlängen-Multiplexer oder -Demultiplexer.**

(30) Priorität: **16.03.83 DE 3309349**

(43) Veröffentlichungstag der Anmeldung:
**17.10.84 Patentblatt 84/42**

(45) Bekanntmachung des Hinweises auf die
Patenterteilung:
**27.12.90 Patentblatt 90/52**

(84) Benannte Vertragsstaaten:
**DE FR GB IT**

(56) Entgegenhaltungen:
**EP-A-0 067 972**
**DE-A-2 331 497**
**DE-A-2 421 337**
**US-A-4 274 706**

**OPTICS LETTERS, Vol. 6, No. 12, p. 639-641**

(73) Patentinhaber: **Firma Carl Zeiss**
**D-7920 Heidenheim (Brenz) (DE)**
㊁ **DE FR IT**
(73) Patentinhaber: **CARL-ZEISS-STIFTUNG trading**
**as CARL ZEISS**
**D-7920 Heidenheim (Brenz) (DE)**
㊁ **GB**

(72) Erfinder: **Reule, Alfred, Dr.**
**Kantstrasse 22**
**D-7080 Aalen (DE)**

Courier Press, Leamington Spa, England.

**Beschreibung**

Die vorliegende Erfindung betrifft einen Wellenlängen-Multiplexer oder -Demultiplexer mit mehreren oder einer Eingangslichtleitfaser(n) und einer oder mehreren Ausgangslichtleitfaser(n), wobei deren Kernendflächen die wirksamen Eingangsbzw. Ausgangsquerschnitte des Multiplexers oder Demultiplexers sind, und mit einem Gitter oder einer Gitterstruktur in einem planaren Multimode-Schichtwellenleiter.

Wellenlängen-Multiplexer und -Demultiplexer werden in der faseroptischen Nachrichtentechnik zur Erhöhung der Übertragungskapazität verwendet. Dabei wird die modulierte Strahlung von mehreren Lichtquellen verschiedener Wellenlängen gleichzeitig durch einen Lichtleiter übertragen. Zum möglichst verlustarmen Zusammenführen und Trennen der verschiedenen Wellenlängenkanäle am Anfang und Ende der Übertragungsstrecke sind Multiplexer und Demultiplexer bekannt, die entweder mit Interferenzfiltern oder mit Beugungsgittern arbeiten.

Ein Wellenlängen-Multiplexer und -Demultiplexer mit räumlicher Strahlungsausbreitung ist z.B. aus der EP-A1-0 067 972 bekannt. Dort wird ein Plangitter verwendet und für eine möglichst einfache Herstellung erfolgt die Kollimation und Abbildung durch eine einfach zu justierende anamorphotische Ein- und Auskoppeloptik, welche aus einer Zylinderlinse und einem zylinderförmigen Hohlspiegel besteht.

Ein besonders kompakter und kleiner Aufbau läßt sich erreichen, wenn man von der räumlichen Strahlungsausbreitung abgeht und einen Schichtwellenleiter verwendet. Für diesen Aufbau ist aus der Literatur (Applied Optics 19, 3588 (1980)) ein Multimode-Schichtwellenleiter-Demultiplexer bekannt, bei dem ein Konkavgitter verwendet wird. Die Eingangslichtleitfaser hat einen Kerndurchmesser von 60 µm und die Ausgangslichtfasern haben einen Kerndurchmesser von 250 µm. Die Dicke des Schichtwellenleiters ist um Kopplungsverluste zu vermeiden mit 80 µm größer als der Kerndurchmesser der Eingangslichtleitfaser und kleiner als der Kerndurchmesser der Ausgangslichtleitfasern gewählt.

Aus einer anderen Literaturstelle (Applied Optics 21, 2195 (1982)) ist ein Multimode-Schichtwellenleiter-Demultiplexer bekannt, bei dem ein Plangitter mit ortsabhängiger Furchenbreite (chirped grating) verwendet wird. Kerndurchmesser und numerische Apertur der Lichtleitfasern stimmen ungefähr mit dem Schichtwellenleiter überein.

Mit diesen bekannten Multimode-Schichtwellenleiter-Demultiplexern läßt sich eine ausreichende Kanaltrennung nur bei einem Kanalabstand von 30 ... 50 nm (im Wellenlängengebiet von ca. 0,8 ... 1,3 µm) erreichen. Mit kleiner werdendem Kanalabstand wird — bedingt durch die Lichtausbreitung in einem Multimode-Schichtwellenleiter — die Überlappung der Kanäle untereinander so groß, daß die Kanaltrennung für die Nachrichtentechnik nicht mehr ausreicht.

In einer weiteren Literaturstelle (Optics letters 6 (12), 639 (1981) steht, daß die Abbildungsfehler durch das Konkavgitter in einem Multimode-Schichtwellenleiter um so größer sind je größer die numerische Apertur der Eingangslichtleitfaser ist. Am Ende dieser Veröffentlichung wird zur Verbesserung der Abbildungsfehler unter anderem der Vorschlag gemacht, einen Schichtwellenleiter mit einem sich erweiternden Taper zu verwenden ('to use a waveguide with an expanding taper'). Weitere Angaben über diese Möglichkeit enthält die Literaturstelle nicht.

Ein Taper mit einem sich erweiternden Querschnitt senkrecht zur Ebene des Schichtwellenleiters ist aus der DE-C2-2 421 337 bekannt. Dieser dient dazu, mit Hilfe einer über ihm angebrachten Koppelschicht bestimmte Moden in einen zweiten Schichtwellenleiter zu koppeln. Wenn man zwischen den bzw. die Lichtleiter und den Schichtwellenleiter Taper mit einem sich in der Ebene des Schichtwellenleiters erweiternden Querschnitt anordnet, dann wird die Kanaltrennung zwar etwas verbessert, jedoch nicht in ausreichendem Maß.

Auch bei der oben zitierten EP-A1-0 067 972 kann zwar durch die anamorphotische Abbildung indirekt auch die numerische Apertur verändert werden. Aber abgesehen davon, daß in dieser Veröffentlichung die numerische Apertur überhaupt nicht erwähnt ist, wird bei allen Ausführungsbeispielen durch die anamorphotische Abbildung die numerische Apertur in der Ebene parallel zu den Gitterfurchen nur vergrößert, wodurch die Kanaltrennung nicht verbessert sondern verschlechtert wird. Die Angabe, daß die Anordnung eine nahezu beliebige Anzahl von anschließbaren Lichtleitfasern ermöglicht, bezieht sich nicht auf die Kanalabstände sondern auf die leichtere Befestigung und Justierung, wenn an Stelle von einzelnen Kugellinsen eine gemeinsame stabförmige Zylinderlinse verwendet wird.

Der vorliegenden Erfindung liegt die Aufgabe zugrunde, einen Multimode-Schichtwellenleiter-Multiplexer oder -Demultiplexer anzugeben, der auch bei Kanalbreiten von ca. 10 nm eine ausreichende Kanaltrennung ergibt.

Die gestellte Aufgabe wird erfindungsgemäß dadurch gelöst, daß die Dicke des Schichtwellenleiters im Bereich des Gitters oder der Gitterstruktur größer als die Dicke bzw. der Durchmesser des Eingangsquerschnittes ist und daß Strahlungsübertragungsmittel vorhanden sind, durch welche die numerische Apertur der in der Ebene senkrecht zur Schichtebene auf das Gitter oder die Gitterstruktur auftreffenden Strahlung kleiner als die numerische Apertur im Eingangsquerschnitt ist.

In einer vorteilhaften Ausführungsform ist die numerische Apertur der in der Ebene senkrecht zur Schichtebene auf die Gitter oder Gitterstruktur auftreffenden Strahlung 0,1 oder kleiner. Durch die gleichzeitige Erhöhung der Dicke, d.h. des Querschnittes, und Erniedrigung der numerische Apertur bleibt der gesamte Lichtstrom erhalten, so daß praktisch keine Verluste eintreten. Eine Verminderung der numerische Apertur erheblich unter 0,05 bringt keinen nennenswerten Gewinn mehr, da sich dann z.B. die Abbildungsfehler des Konkavgitters zu stark bemerkbar machen.

In einer vorteilhaften Ausführungsform sind für die Ankopplung der Lichtleitfasern an den Schichtwellenleiter keilförmige Lichtleiterübergangsstücke vorgesehen, deren Dicke von der Dicke bzw. dem Durchmesser des Eingangsquerschnittes auf die Dicke des Schichtwellenleiters ansteigt. Dabei kann auch die Breite der Lichtleiterübergangsstücke ansteigen. Zweckmäßigerweise werden auch auf der Ausgangsseite entsprechende Lichtleiterübergangsstücke vorgesehen.

In einer besonders vorteilhaften Ausführungsform ist der Schichtwellenleiter mindestens in einem Teil des Bereiches zwischen die Gitter oder Gitterstruktur und der gegenüberliegenden Begrenzungsfläche, durch welche die Strahlung ein und austritt, keilförmig ausgebildet.

Weitere Ausgestaltungen der Erfindungen gehen aus den Unteransprüchen hervor.

Die Erfindung wird im folgenden anhand von vier in den Figuren 1a bis 4c dargestellten Ausführungsbeispielen näher erläutert. Dabei zeigen:

Fig. 1a,b Draufsicht und Schnitt für einen Demultiplexer mit Lichtleiterübergangsstücken zwischen Lichtleitfasern und Schichtwellenleiter;

Fig. 1c,d Draufsicht und Schnitt für einen Demultiplexer mit Linsen zwischen Lichtleitfasern und Schichtwellenleiter;

Fig. 1e,f Draufsicht und Schnitt für einen Demultiplexer mit Gradienten-Stablinsen zwischen Lichtleitfasern und Schichtwellenleiter;

Fig. 2a,b Draufsicht und Schnitt für einen Demultiplexer, bei dem die Lichtleitfasern direkt an einen keilförmigen Schichtwellenleiter angekoppelt sind;

Fig. 3a-c Draufsicht und zwei Schnitte für einen Multiplexer mit einem Schichtwellenleiter von gleichbleibender Dicke und

Fig. 4a-c Draufsicht und zwei Schnitte für einen Multiplexer mit einem keilförmigen Schichtwellenleiter.

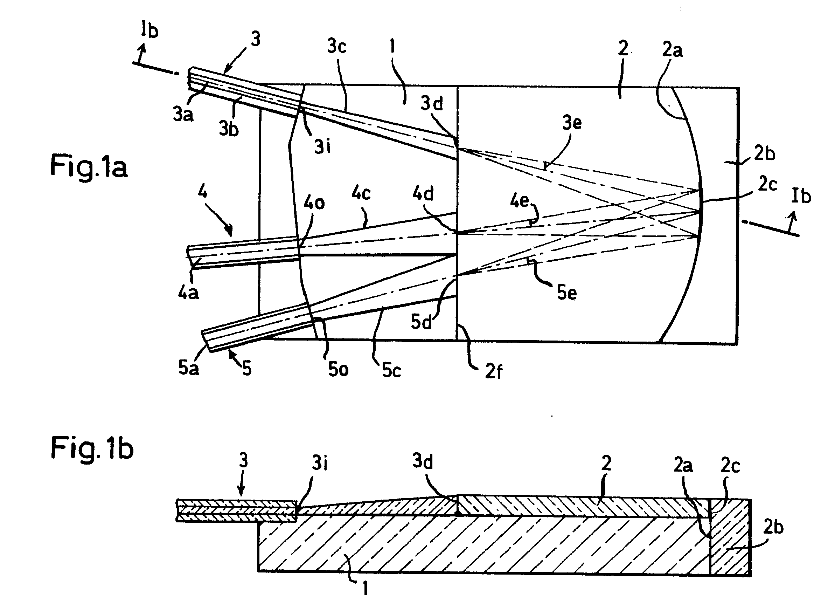

In den Fig. 1a und 1b ist mit 1 ein Substrat bezeichnet, auf das der Schichtwellenleiter 2 aufgebracht ist. Substrat 1 und Schichtwellenleiter 2 werden auf der einen Seite von einer konkaven Fläche 2a begrenzt, an welche — in bekannter Technik — das Teil 2b mit dem Gitter 2c angesetzt ist. Auf der anderen Seite des Schichtwellenleiters 2 ist die aus Kern 3a und Mantel 3b bestehende Eingangslichtleitfaser 3 über ein Lichtleiterübergangsstück 3c angekoppelt. Von den Ausgangslichtleitfasern sind (der Übersichtlichkeit halber) nur zwei gezeichnet und mit 4 und 5 bezeichnet. Ihre Kerne 4a und 5a sind über die Lichtleiterzwischenstücke 4c und 5c an den Schichtwellenleiter 2 angekoppelt. Die Lichtleiterübergangsstücke 3c, 4c und 5c sind — z.B. in einer aus der DE-OS 30 24 104 bekannten Technik — auf das Substrat 1 aufgebracht. Auch die Ankopplung der Lichtleiter 3, 4 und 5 an die Lichtleiterübergangsstücke 3c, 4c und 5c erfolgt in bekannter und in der Zeichnung nicht näher dargestellter Technik.

Durch die Lichtleiterübergangsstücke 3c, 4c und 5c erfolgt der Übergang von Kerndurchmesser 3a, 4a und 5a der Lichtleiter 3, 4 und 5 auf die Dicke des Schichtwellenleiters 2.

Durch diese in Fig. 1b dargestellte keilförmige Dickenänderung und die in Fig. 1a dargestellte Erweiterung der Lichtleiterzwischenstücke wird die numerische Apertur der in ihnen fortgeleiteten Strahlung verändert. Der Deutlichkeit halber sind die Lichtleiter 3,4 und 5, die Lichtleiterübergangsstücke 3c,4c und 5c sowie die Dicke des Schichtwellenleiters 2 im Verhältnis zu den anderen Abmessungen zu groß gezeichnet. In einem praktischen Ausführungsbeispiel haben die Eingangslichtleiter einen Kerndurchmesser 3a von 50 μm und die Ausgangslichtleiter einen Kerndurchmesser 4a und 5a von 100 μm. Die Lichtleiterzwischenstücke haben aus herstellungstechnischen Gründen einen quadratischen bzw. rechteckigen Querschnitt, und zwar hat das Lichtleiterübergangsstück 3c einen Eingangsquerschnitt 3i von 50 μm x 50 μm und einen Ausgangsquerschnitt 3d von 200 μm x 200 μm; die Lichtleiterübergangsstücke 4c und 5c haben Querschnitte 40 und 50 von 100 μm x 100 μm und Querschnitte 4d und 5d von 400 μm x 200 μm. Der Schichtwellenleiter 2 hat eine Dicke von 200 μm; seine anderen Abmessungen betragen ca. 20 mm x 15 mm.

Das konkave Gitter 2c ist im Schichtwellenleiter 2 in bekannter Weise so angeordnet, daß das Spektrum des Eintrittsquerschnittes 3d auf der Begrenzungsfläche 2f abgebildet wird. Da die dort angekoppelten Lichtleiterübergangsstücke 4c und 5c eine größere Breite in den Querschnitten 4d und 5d haben als das Lichtleiterübergangsstück 3c im Querschnitt 3d werden Toleranzen in den Wellenlängen der einzelnen Kanäle ausgeglichen. Die numerische Apertur der Eingangsstrahlung im Schichtwellenleiter ist in Fig. 1a mit 3e bezeichnet und die numerische Apertur für die zwei Wellenlängenkanäle der Ausgangsstrahlung mit 4e und 5e. Entsprechend dieser numerische Apertur wird der Brechzahlunterschied zwischen Substrat 1 und Schichtwellenleiter 2 gewählt. Beträgt z.B. die numerische Apertur der Lichtleiter 0,24 und soll diese numerische Apertur um den Faktor 4 auf 0,06 reduziert werden, dann muß der Brechzahlunterschied zwischen Substrat 1 und Schichtwellenleiter 2 (entsprechend der bekannten Näherungsformel $n \triangle = (NA)^2/2n$) gleich 0.0012 sein, wenn die Brechzahl n für das Substrat 1,5 ist. Für die Lichtleiterzwischenstücke 3c, 4c und 5c ist der Brechzahlunterschied zum Substrat praktisch ebenso groß wie bei den Lichtleitfasern zwischen Kern und Mantel, so daß am Übergang zwischen ihnen und dem Schichtwellenleiter kein Brechzahlsprung auftritt. Über dem Schichtwellenleiter 2 und über bzw. neben den Lichtleiterübergangsstücken 3c, 4c und 5c kann Substrat angeordnet sein oder der Abschluß durch Luft erfolgen.

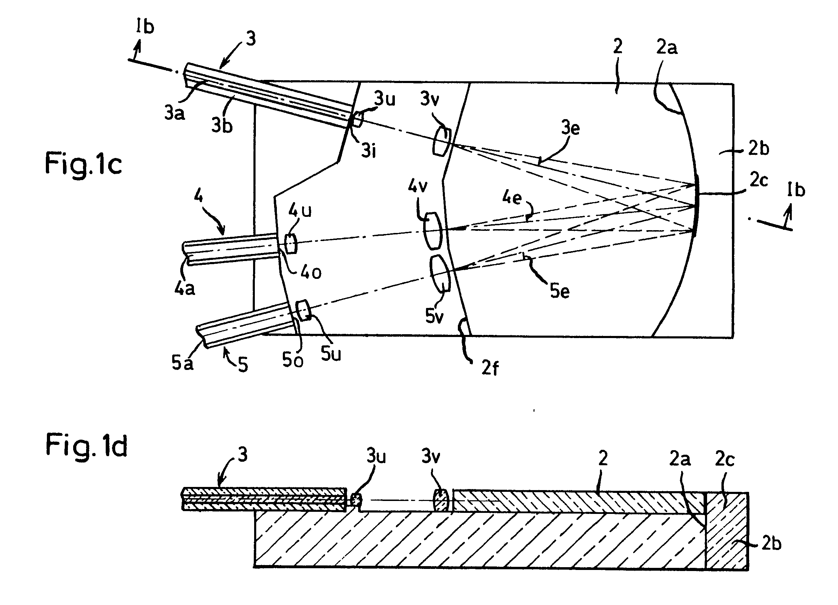

In den Figuren 1c und d sind zwischen dem Schichtwellenleiter 2 und den Lichtleitfasern 3, 4 und 5 an Stelle von Lichtleiterübergangsstücken die Linsen 3u, 3v, 4u, 4v, 5u und 5v angeordnet. Die Linse 3v hat einen Durchmesser, der mindestens gleich der Dicke des Schichtwellenleiters 2 ist; die Linse 3u hat einen Durchmesser, der mindestens gleich dem Durchmesser des Eingangsquerschnittes 3i ist. Die Linsen 3u und 3v haben gleiche Brennweite und stehen im Abstand dieser Brennweite voneinander. Die Brennweite ist so gewählt, daß der Radius des Eingangsquerschnittes 3i von der Linse 3v aus unter einem Winkel erscheint, dessen Sinus der gewünschten numerischen Apertur 3e im Schichtwellenleiter 2 entspricht.

Bei den ausgangsseitigen Linsen 4u und 4v sowie 5u und 5v sind Durchmesser und Brennweite im gleichen Verhältnis größer gegenüber den eingangsseitigen Linsen 3u und 3v, in dem der Durchmesser der Ausgangsquerschnitte 4o bzw. 5o den Durchmesser des Eingangsquerschnittes 3i übertrifft.

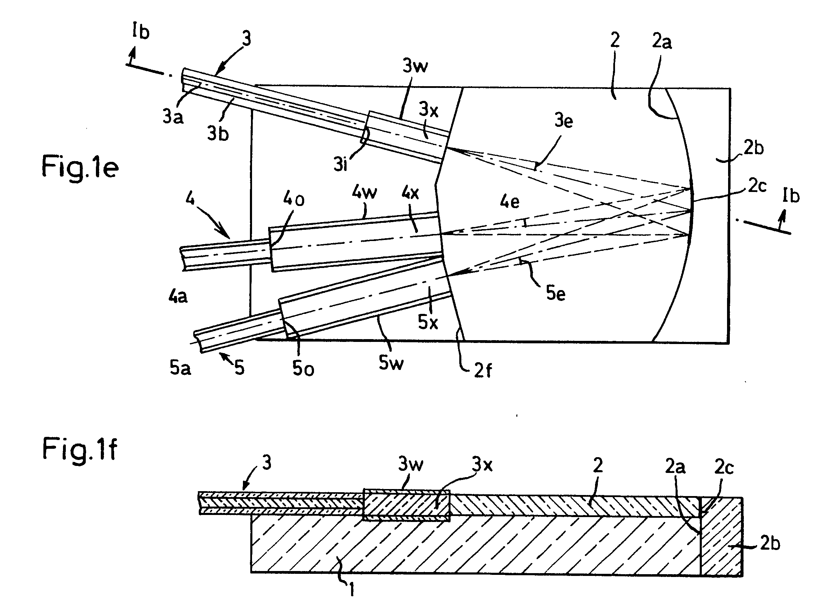

Eine vorteilhafte weitere Ausgestaltung zeigen die Figuren 1e und f, bei denen die Linsen durch Gradienten-Stablinsen 3w, 4w und 5w ersetzt sind. Letztere haben dieselbe numerische Apertur wie die Lichtleitfasern 3, 4 und 5 und schließen direkt an diese und den Schichtwellenleiter 2 an. Die Gradienten-Stablinse 3w hat einen Kerndurchmesser 3x, der gleich der Dicke des Schichtwellenleiters 2 ist. Ihre Länge beträgt 1/4 der Periodenlänge. Durch sie wird die numerische Apertur der Eingangsstrahlung im Verhältnis des Eingangsdurchmessers 3i (der gleich dem Kerndurchmesser 3a ist) zum Kerndurchmesser 3x herabgesetzt. Auf der Ausgangsseite haben die Gradienten-Stablinsen 4w und 5w einen im Verhältnis der Ausgangsdurchmesser 4o bzw. 5o zum Eingangsdurchmesser 3i größeren Durchmesser 4x bzw. 5x als die Dicke des Schichtwellenleiters 2. Ihre Länge beträgt ebenfalls 1/4 der Periodenlänge; sie ist wegen des größeren Durchmessers größer als die Länge der Gradienten-Stablinse 3w.

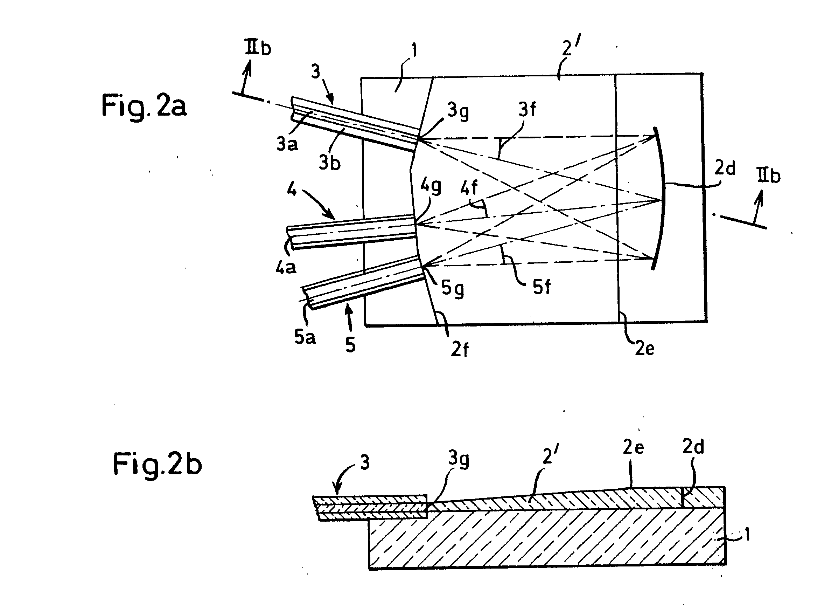

Die Figuren 2a und 2b zeigen für einen Demultiplexer ein besonders vorteilhaftes Ausführungsbeispiel, bei dem die Lichtleitfasern 3, 4 und 5 direkt an den Schichtwellenleiter 2' angekoppelt sind und bei dem die Dicken- und Aperturänderung im Schichtwellenleiter 2' selbst erfolgt. In diesem Ausführungsbeispiel ist außerdem eine Gitterstruktur 2d in bekannter Weise direkt im Schichtwellenleiter 2' hergestellt. Dies kann z.B. durch Aufbringen von Photolack auf die Oberfläche des Schichtwellenleiters 2' erfolgen. Der Photolack wird mit dem Bild eines Gitters oder Gitterstruktur belichtet und anschließend entwickelt. Nach dem Wegätzen der Gitter oder Gitterstruktur aus dem Schichtwellenleiter wird eine Metallschicht aufgebracht.

Die Eingangslichtleitfaser ist in den Figuren 2a und b wieder mit 3 und die Ausgangslichtleitfasern sind mit 4 und 5 bezeichnet. Auf der Seite, an der die Lichtleitfasern mit den Querschnitten 3g, 4g und 5g angekoppelt sind, hat der Schichtwellenleiter 2' eine Dicke, die dem Kerndurchmesser 3a der Eingangslichtleiterfaser entspricht. Diese Dicke steigt bis zur Linie 2e gleichmäßig an, z.B. von 50 auf 200 µm. Es ist jedoch auch möglich, auf den Knick 2e zu verzichten und die Dicke bis hinter die Gitter oder Gitterstruktur 2d ansteigen zu lassen. Durch die keilförmig ansteigende Schichtdicke des Schichtwellenleiters 2' wird die numerische Apertur der Strahlung in der Ebene senkrecht zur Schichtunterlage um den Faktor 4 reduziert. Dagegen bleiben die in Fig. 2a mit 3f, 4f und 5f bezeichneten numerischen Aperturen in der Ebene parallel zur Schichtunterlage unverändert. Für die Kanaltrennung spielt dies praktisch keine Rolle, weil diese nur von der numerischen Apertur der Strahlung in der Ebene senkrecht zur Schichtunterlage bzw. parallel zu den Furchen der Gitter oder Gitterstruktur abhängt. Durch die größere Apertur der Strahlung parallel zur Schichtunterlage entstehen lediglich größere Abbildungsfehler der konkaven Gitter oder Gitterstruktur 2d als in dem in Fig. 1a gezeigten Ausführungsbeispiel; diese Abbildungsfehler spielen jedoch bei der angegebenen Dimensionierung noch keine entscheidende Rolle. Ein Nachteil des in Fig. 2a gezeigten Ausführungsbeispiels gegenüber dem in Fig. 1a gezeigten ist, daß die Gitter oder Gitterstruktur 2d in ihrer Ausdehnung senkrecht zu den Furchen um den Faktor 4 größer sein muß; dafür ist jedoch der übrige Aufbau einfacher. In dem in den Figuren 2a und 2b gezeigten Ausführungsbeispiel ist die Brechzahl des Schichtwellenleiters 2' gleich oder praktisch gleich der von den Kernen 3a, 4a und 5a der Lichtleitfasern.

Es ist möglich. bei den Lichtleiterübergangsstücken 3c, 4c und 5c in Fig. 1a die Eingangsbreite bis zum Ausgang beizubehalten. In diesem Fall würde nur die numerische Apertur der Strahlung in der Ebene senkrecht zur Schichtunterlage durch die Lichtleiterübergangsstücke verändert werden und das Gitter 2a müßte senkrecht zur Furchenrichtung eine viermal größere Ausdehnung haben. Auf die Kanaltrennung würde dies praktisch keinen Einfluß haben. Natürlich ist auch eine geringere Zunahme in der Breite als um den Faktor 4 möglich.

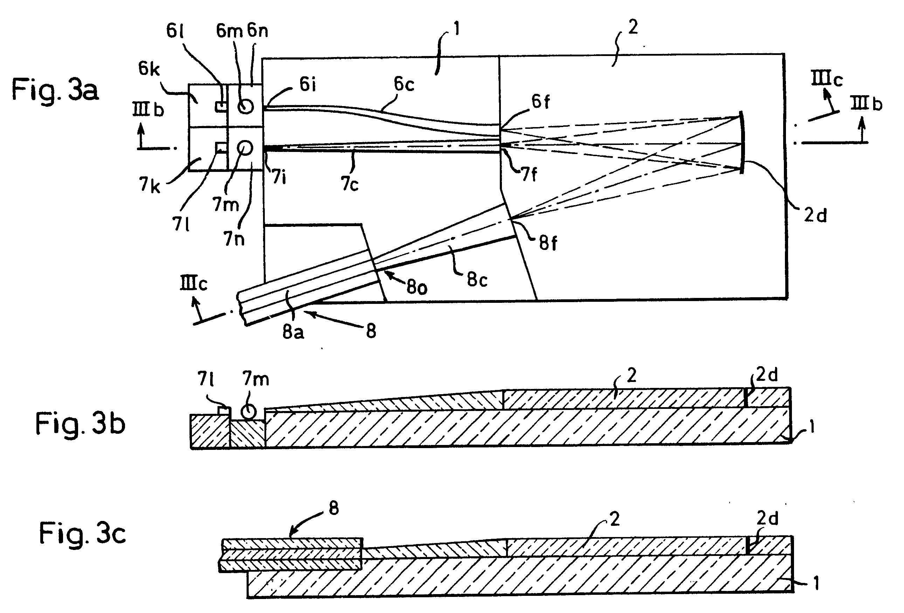

Die Figuren 3a bis 3c zeigen ein erstes Ausführungsbeispiel für einen Multiplexer. Mit 1 ist wieder das Substrat, mit 2 der Schichtwellenleiter und mit 2d die Gitterstruktur bezeichnet. Auch in diesem und dem nächsten Ausführungsbeispiel sind der Übersichtlichkeit halber — entsprechend zu den obigen Beispielen für Demultiplexer — nur zwei Eingangskanäle gezeigt, welche durch die Lichtleiterübergangsstücke 6c und 7c dem Schichtwellenleiter 2 zugeführt werden. Aus den Laserdioden 61 und 71, die einen Durchmesser von ca. 15 µm haben, tritt die Strahlung mit einer numerischen Apertur aus, die senkrecht zur Zeichenebene ca. 0,4 und parallel zur Zeichenebene ca. 0,15 beträgt. Diese Strahlung wird durch die Kugellinsen 6m und 7m in bekannter Weise auf die Eingangsquerschnitte 6i und 7i der Lichtleiterübergangsstücke 6c und 7c im Maßstab 1:1 abgebildet. Der Querschnitt der Lichtleiterübergangsstücke nimmt senkrecht zur Schichtunterlage von 15 µm auf 120 µm zu; dadurch wird die numerische Apertur der Strahlung von 0,4 auf 0,05 verringert. Parallel zur Schichtunterlage nimmt der Querschnitt von 15 µm auf 45 µm zu, wodurch

die numerische Apertur der Strahlung in dieser Ebene von 0,15 auf 0,05 reduziert wird. Am Eingang zum Schichtwellenleiter 2 liegen die Enden der Lichtleiterübergangsstücke 6c und 7c dicht nebeneinander; an der anderen Seite liegen ihre Enden wegen der Fassungen 6k und 7k der Laserdioden 61 und 71 und wegen der Halterungen 6n und 7n der Kugellinsen 6m und 7m weiter auseinander. Der Schichtwellenleiter 2 hat eine gleichmäßige Dicke von 120 µm. Die in ihm angeordnete Gitterstruktur 2d vereinigt die an den Eintrittsquerschnitten 6f und 7f vorliegenden Strahlungen unterschiedlicher Wellenlängen in dem Querschnitt 8f. Wegen der unvermeidlichen Toleranzen insbesondere der Laserdioden, sowie wegen Temperatureinflüssen etc. hat das Lichtleiterübergangsstück 8c im Querschnitt 8f parallel zur Schichtunterlage eine Breite von 120 µm, die auf 40 µm im Querschnitt 8o verringert wird. Senkrecht zur Schichtunterlage ändert sich die Dicke im Querschnitt 8f von der Dicke des Schichtwellenleiters 2 mit 120 µm ebenfalls auf 40 µm im Querschnitt 8o, so daß die gesamte Strahlung vom angeschlossenen Lichtleiter 8 aufgenommen wird, dessen Kern 8a einen Durchmesser von 50 µm hat. Im Lichtleiterübergangsstück 8c erhöht sich die numerische Apertur von 0,05 auf 0,15; also auf einen Wert, der vom Lichtleiter 8 vollständig übertragen wird. Am Übergang zwischen den Lichtleiterübergangsstücken 6c, 7c und 8c zum Schichtwellenleiter 2 erfolgt ein Brechzahlsprung entsprechend den Ausführungen zur Fig. 1.

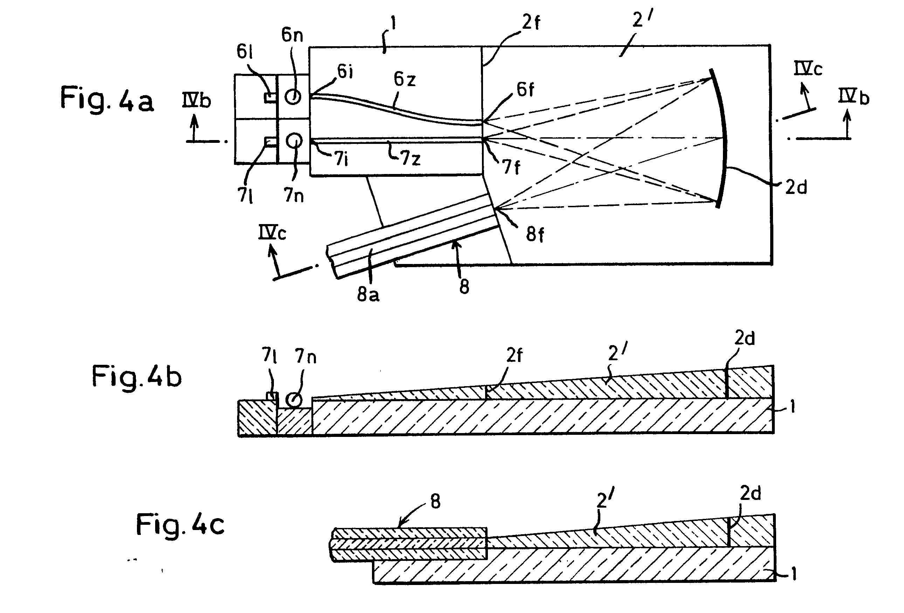

Ein weiteres Ausführungsbeispiel für einen Multiplexer zeigen die Figuren 4a bis c. Hier findet wieder eine Änderung im Schichtwellenleiter 2' statt. Wegen der sehr großen numerischen Apertur der Laserdioden in der Ebene senkrecht zur Zeichenebene sind trotzdem auf der Eingangsseite die Lichtleiterübergangsstücke 6z und 7z angeordnet, welche die numerische Apertur von 0,4 auf 0,15 dadurch reduzieren, daß ihre Dicke von 15 µm in den Eingangsquerschnitten 6i und 7i auf 40 µm in den Querschnitten 6f und 7f zunimmt. Infolge ihrer gleichbleibenden Breite von 15 µm bleibt in ihnen die numerische Apertur der Strahlung in der Ebene parallel zur Schichtunterlage unverändert 0,15. Im Schichtwellenleiter 2' wird durch einen Anstieg der Dicke von 40 µm auf 120 µm die numerische Apertur von 0,15 auf 0,05 vetmindert und nach Reflexion an der Gitter oder Gitterstruktur wieder von 0,05 auf 0,15 erhöht. Die Ausgangslichtleitfaser 8, deren Kern 8a einen Durchmesser von 50 µm hat, nimmt die Strahlung im Querschnitt 8f mit einer numerischen Apertur von 0,15 auf, wobei in der Ebene parallel zur Schichtunterlage nur ca. 1/3 des Kerndurchmessers ausgenutzt wird, wodurch wieder eine ausreichende Sicherheit für die unvermeidlichen Toleranzen erreicht wird.

## Patentansprüche

1. Wellenlängen-Multiplexer oder -Demultiplexer mit mehreren oder einer Eingangslichtleitfaser(n) und einer oder mehreren Ausgangslichtleitfaser(n), wobei deren Kernendflächen die wirksamen Eingangs- bzw. Ausgangsquerschnitte des Multiplexers oder Demultiplexers sind, und mit einem Gitter oder einer Gitterstruktur in einem planaren Multimode-Schichtwellenleiter, dadurch gekennzeichnet, daß die Dicke des Schichtwellenleiters (2, 2') im Bereich des Gitters (2c) oder der Gitterstruktur (2d) größer als die Dicke bzw. der Durchmesser des Eingangsquerschnittes (3i, 3g, 6i, 7i) ist und daß Strahlungsübertragungsmittel (3c, 4c, 6c, 8c, 6z, 3u, 3v, 4u, 4v, 3w, 4w) vorhanden sind, durch welche die numerische Apertur der in der Ebene senkrecht zur Schichtebene auf das Gitter (2c) oder die Gitterstruktur (2d) auftreffenden Strahlung kleiner als die numerische Apertur im Eingangsquerschnitt (3i, 3g, 6i, 7i) ist.

2. Vorrichtung nach Anspruch 1, dadurch gekennzeichnet, daß die numerische Apertur der in der Ebene senkrecht zur Schichtebene auf das Gitter (2c) oder die Gitterstruktur (2d) auftreffenden Strahlung 0,1 oder kleiner ist.

3. Vorrichtung nach Anspruch 1 oder 2, dadurch gekennzeichnet, daß als Strahlungsübertragungsmittel zwischen Eingangsquerschnitt (3i, 6i, 7i) und Schichtwellenleiter (2, 2') keilförmige Lichtleiterübergangsstücke (3c, 6c, 7c, 6z, 7z) vorgesehen sind, deren Dicke von der Dicke bzw. dem Durchmesser des Eingangsquerschnittes (3i, 6i, 7i) auf die Dicke des Schichtwellenleiters (2, 2') ansteigt.

4. Vorrichtung nach Anspruch 3, dadurch gekennzeichnet, daß die keilförmigen Lichtleiterübergangsstücke (3c, 6c, 7c) so ausgeführt sind, daß ihre Breite von der Breite bzw. dem Durchmesser des Eingangsquerschnittes (3i, 6i, 7i) auf einen größeren Wert ansteigt.

5. Vorrichtung nach Anspruch 3 oder Anspruch 4, dadurch gekennzeichnet, daß als Strahlungsübertragungsmittel zwischen Schichtwellenleiter (2, 2') und Ausgangsquerschnitt (4o, 5o, 8o) keilförmige Lichtleiterübergangsstücke (4c, 5c, 8c) vorgesehen sind, deren Dicke von der Dicke des Schichtwellenleiters (2, 2') auf die Dicke bzw. den Durchmesser des Ausgangsquerschnittes (4o, 5o, 8o) abnimmt und deren Breite auf die Breite bzw. den Durchmesser des Ausgangsquerschnittes (4o, 5o, 8o) abnimmt.

6. Vorrichtund nach Anspruch 1 oder 2, dadurch gekennzeichnet, daß als Strahlungsübertragungsmittel zwischen Eingangsquerschnitt (3i) und Schichtwellenleiter (2) sowie zwischen Schichtwellenleiter (2) und Ausgangsquerschnitt (4o, 5o, 8o) Linsen (3u, 3v, 4u, 4v, 5u, 5v) angeordnet sind.

7. Vorrichtung nach Anspruch 1 oder 2, dadurch gekennzeichnet, daß als Strahlungsübertragungsmittel zwischen Eingangsquerschnitt (3i) und Schichtwellenleiter (2) sowie zwischen Schichtwellenleiter (2) und Ausgangsquerschnitt (4o, 5o, 8o) Gradienten-Stablinsen (3w, 4w, 5w) angeordnet sind.

8. Vorrichtung nach einem der Ansprüche 1 bis 7, dadurch gekennzeichnet, daß die Strahlungsübertragungsmittel mit dem Schichtwellenleiter (2') vereinigt sind, indem der Schichtwellenleiter (2') mindestens in einem Teil des Bereiches zwischen dem Gitter (2c) oder der Gitterstruktur (2d) und der gegenüberliegenden Begrenzungsfläche (2f), durch welche die Strahlung ein- und austritt, keilförmig ausgebildet ist.

**Revendications**

1. Multiplexeur ou démultiplexeur de longueurs d'onde comprenant plusieurs ou une seule fibre(s) optique(s) d'entrée et une ou plusieurs fibre(s) optique(s) de sortie dont les faces d'extrémité du coeur sont les sections efficaces d'entrée ou de sortie du multiplexeur ou du démultiplexeur, ainsi qu'un réseau ou une structure de réseau dans un guide d'ondes multimode à couche de type planar, caractérisé en ce que l'épaisseur du guide d'ondes à couche (2, 2') dans la région du réseau (2c) ou de la structure de réseau (2d) est plus grande que l'épaisseur ou le diamètre de la section d'entrée (3i, 3g, 6i, 7i) et que des moyens de transmission du rayonnement (3c, 4c, 6c, 8c, 6z, 3u, 3v, 4u, 4v, 3w, 4w) sont prévus, grâce auxquels l'ouverture numérique du rayonnement tombant sur le réseau (2c) ou la structure de réseau (2d) dans le plan perpendiculaire au plan de la couche est plus petite que l'ouverture numérique dans la section d'entrée (3i, 3g, 6i, 7i).

2. Dispositif selon la revendication 1, caractérisé en ce que l'ouverture numérique du rayonnement tombant sur le réseau (2c) ou la structure de réseau (2d) dans le plan perpendiculaire au plan de la couche est de 0,1 ou moins.

3. Dispositif selon la revendication 1 ou 2, caractérisé en ce que, comme moyen de transmission du rayonnement entre la section d'entrée (3i, 6i, 7i et le guide d'ondes à couche (2, 2'), on a prévu des pièces de transition conductrices de lumière (3c, 6c, 7c, 6z, 7z) en forme de coins, dont l'épaisseur augmente de l'épaisseur ou du diamètre de la section d'entrée (3i, 6i, 7i) à l'épaisseur du guide d'ondes à couche (2, 2').

4. Dispositif selon la revendication 3, caractérisé en ce que les pièces de transition en forme de coins (3c, 6c, 7c) sont réalisées de manière que leur largeur augmente de la largeur ou du diamètre de la section d'entrée (3i, 6i, 7i) à une valeur plus grande.

5. Dispositif selon la revendication 3 ou 4, caractérisé en ce que, comme moyen de transmission du rayonnement entre le guide d'ondes à couche (2, 2') et la section de sortie (4o, 5o, 8o), on a prévu des pièces de transition conductrices de lumière (4c, 5c, 8c) en forme de coins, dont l'épaisseur diminue de l'épaisseur du guide d'ondes à couche (2, 2') à l'épaisseur ou au diamètre de la section de sortie (4o, 5o, 8o) et dont la largeur diminue jusqu'à la largeur ou au diamètre de la section de sortie (4o, 5o, 8o).

6. Dispositif selon la revendication 1 ou 2, caractérisé en ce que des lentilles (3u, 3v, 4u, 4v, 5u, 5v) sont disposées en tant que moyens de transmission du rayonnement entre la section d'entrée (3i et le guide d'ondes à couche (2), ainsi qu'entre le guide d'ondes à couche (2) et la section de sortie (4o, 5o, 8o).

7. Dispositif selon la revendication 1 ou 2, caractérisé en ce que des lentilles-barreaux à gradients (3w, 4w, 5w) sont disposées en tant que moyens de transmission du rayonnement entre la section d'entrée (3i) et le guide d'ondes à couche (2), ainsi qu'entre le guide d'ondes à couche (2) et la section de sortie (4o, 5o, 8o).

8. Dispositif selon une des revendications 1 à 7, caractérisé en ce que les moyens de transmission du rayonnement sont réunis au guide d'ondes à couche (2') du fait que le guide d'ondes à couche (2') est réalisé en forme de coin dansune partie au moins de la zone entre le réseau (2c) ou la structure de réseau (2d) et la surface de délimitation (2f) opposée, par laquelle le rayonnement entre et sort.

**Claims**

1. Wavelength multiplexer or demultiplexer with several or one input fiber(s) and one or several output fiber(s), with their core end faces being the effective input or output cross-sections of the multiplexer or demultiplexer, and a grating or grating structure in a planar multimode slab waveguide; characterized by the fact that the thickness of the slab waveguide (2, 2') in the area of the grating (2c) or grating structure (2d) is greater than the thickness or diameter of the input cross-section (3i, 3g, 6i, 7i) and that radiation-conducting transition means (3c, 4c, 6c, 8c, 6z, 3u, 3v, 4u, 4v, 3w, 4w) are provided which make the numerical aperture of the radiation incident on the grating (2c) or the grating structure (2d) in the plane perpendicular to the slab plane smaller than the numerical aperture in the input cross-section (3i, 3g, 6i, 7i).

2. Device according to claim 1, characterized by the fact that the numerical aperture of the radiation incident on the grating (2c) or the grating structure (2d) in the plane perpendicular to the plane of the slab is 0.1 or smaller.

3. Device according to claim 1 or 2, characterized by the fact that as radiation-conducting transition means between the input cross-section (3i, 6i, 7i) and the slab waveguide (2, 2') wedge-shaped interface members (3c, 6c, 7c, 6z 7z) are provided which have a thickness increasing from the thickness or the diameter of the input cross-section (3i, 6i, 7i) to the thickness of the slab waveguide (2, 2').

4. Device according to claim 3, characterized by the fact that the wedge-shaped interface members (3c, 6c, 7c) are configured in such a way that their width increases from the width or the diameter of the input cross-section (3i, 6i, 7i) to a greater value.

5. Device according to claim 3 or 4, characterized by the fact that as radiation-conducting transition means between the slab waveguide (2, 2') and the output cross-section (40, 50, 80) wedge-shaped interface members (4c, 5c, 8c) are provided which have a thickness decreasing from the thickness of the slab waveguide (2, 2') to the thickness or the diameter of the output cross-section (40, 50, 80), and which have a width decreasing to the width or the diameter of the output cross-section (40, 50, 80).

6. Device according to claim 1 or 2, characterized by the fact that lenses (3u, 3v, 4u, 4v, 5u, 5v) are disposed as radiation-conducting transition means between the input cross-section (3i) and the slab waveguide (2) and between the slab waveguide (2) and the output cross-section (40, 50, 80).

7. Device according to claim 1 or 2, characterized by the fact that gradient rod lenses (3w, 4w, 5w) are disposed as radiation-conducting transition means between the input cross-section (3i) and the slab waveguide (2) and between the slab waveguide (2) and the output cross-section (40, 50, 80).

8. Device according to claim 1 to 7, characterized by the fact that the radiation-conducting transition means are combined with the slab waveguide (2'), with the slab waveguide (2') being wedge-shaped at least in one part of the area between the grating (2c) or the grating structure (2d) and the opposite boundary surface (2f) through which the radiation enters or exits.

Fig.1a

Fig.1b

EP 0 121 812 B1

Fig.1c

Fig.1d

**Fig.1e**

**Fig.1f**

Fig. 2a

Fig. 2b

EP 0 121 812 B1

Fig. 3a

Fig. 3b

Fig. 3c

EP 0 121 812 B1

Fig. 4a

Fig. 4b

Fig. 4c

6